Europäisches Patentamt

European Patent Office

Office européen des brevets

(11) Publication number: **0 279 804**
**A1**

## (12) EUROPEAN PATENT APPLICATION

(21) Application number: 88870021.8

(22) Date of filing: 19.02.88

(51) Int. Cl.⁴: **A 22 C 7/00**
**A 47 J 43/20**

(30) Priority: 20.02.87 BE 8700150

(43) Date of publication of application:
24.08.88 Bulletin 88/34

(84) Designated Contracting States:
AT BE DE ES FR GB IT NL SE

(71) Applicant: Verbert, Jules
Nachtegaaldreef 9
B-2242 Zandhoven (BE)

(72) Inventor: Verbert, Jules
Nachtegaaldreef 9
B-2242 Zandhoven (BE)

(54) Apparatus for the manufacture of balls from pasty- and doughy products.

(57) Apparatus for the manufacture of balls from pasty- or doughy products, consisting of two essentially identical parts (1, 2), formed each by a plane element (3) provided at one side with parallel semi-cylindrical grooves (5) and having at the other side (6) means of dosage, the aforesaid grooves being positioned in such a way that when both parts are placed inversily on one another, the grooves can co-operate and provide the forming of channels.

Fig.1

## Description

Apparatus to make balls from pasty- or doughy products.

The invention relates to an apparatus for the manufacture of balls from pasty- or doughy products, particularly foodstuffs.

This apparatus is especially suitable to be applied in the processing of meat-dough, such as forcemeat, in order to provide for the manufacture of forcemeat balls.

It is known that the manufacture of forcemeat balls requires relatively much time, in the course of which moreover a certain dexterity is required. Therefore it is obvious that the disadvantageous time-absorbing factor will weigh heavily in industrial kitchens where huge quantities of forcemeat balls or similar ar to be manufactured.

Therefore the purpose of the present invention is to provide for an apparatus by which the aforesaid disadvantage is eliminated, and allowing within a relatively short period of time to manufacture a great quantity of forcemeat balls. Besides, the use of the apparatus does not remain restricted to industrial kitchens, but can be employed in all kinds of applications.

The apparatus for the manufacture of balls from pasty- or doughy products therefore consists, according to the invention, of two identical parts, formed both by a plane element that is provided at one side with parallel groove-shaped recesses, and that has means of dosage at its other side, the groove-shaped recesses being situated in such a way that when the aforementioned parts are opened inversily to one another, they can co-operate and provide the forming of channels. The means of dosage that are meant to apply the basic product in appropriate quantities to the apparatus, are formed preferably by two opposite raised rims, provided with notches at regular distances. Moreover, the apparatus can be equipped with a spatula that can co-operate with the aforementioned notches.

In order to demonstrate better the characteristics and the operation of the invention, a preferential form of design is described hereafter, as an example without any restrictive character, with reference to the annexed drawings, in which:

figure 1 represents perspectively the apparatus according to the invention, in the opened position;

figure 2 represents a view after arrow F2 in figure 1, in the closed position of the apparatus, in other words, in which the two essentially plane elements are co-operating together;

figures 3 to 11 inclusive represent schematically the operation and the use of the apparatus.

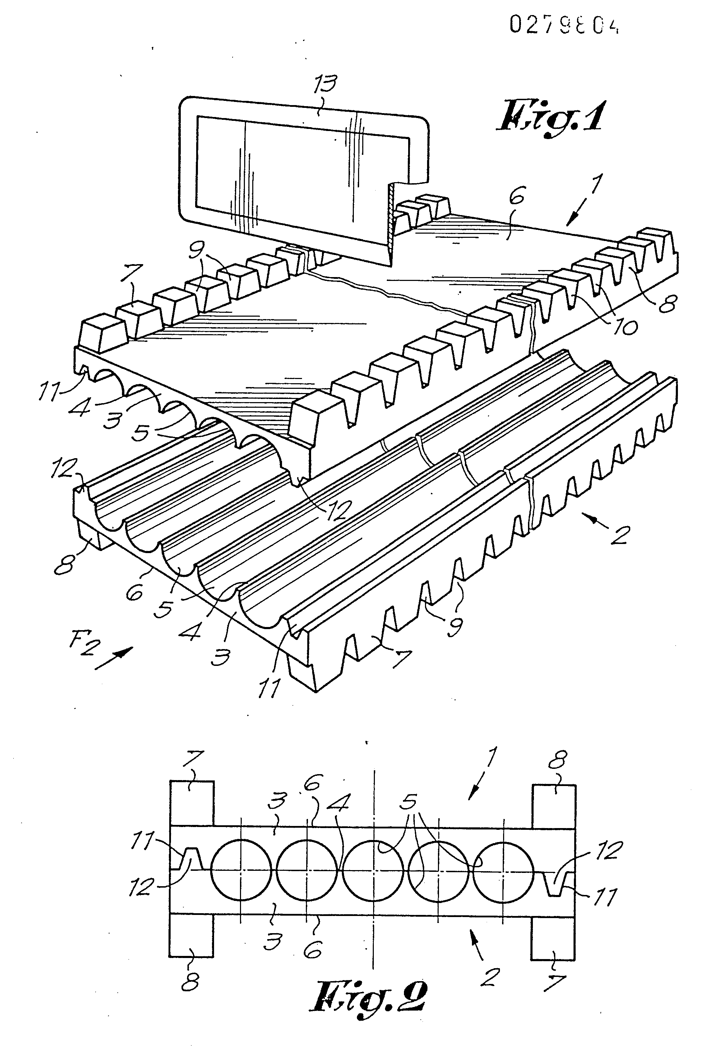

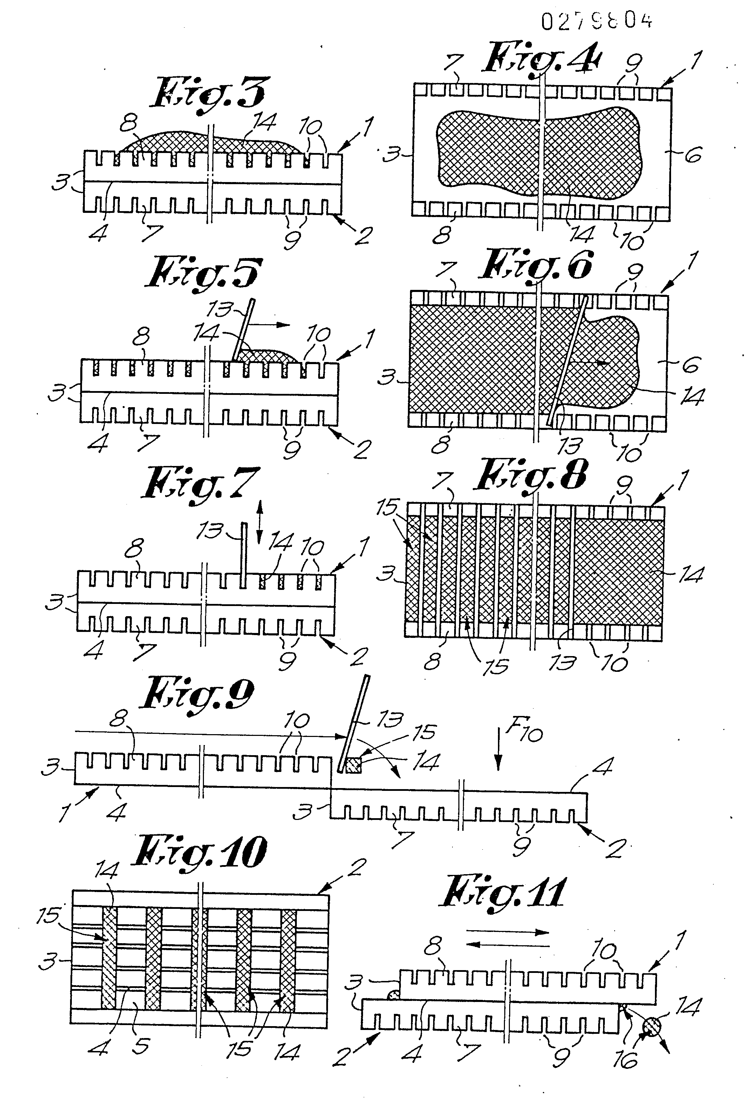

As represented in the form of design as per figures 1 and 2, the apparatus for the manufacture of balls according to the invention, consists essentially of two identical or almost identical parts 1 and 2. Each of these parts 1 and 2 consists of a plane element 3 that is provided at one side 4 with parallel semi-cylindrical grooves 5 and shows at the other side 6 two opposite raised rims 7 and 8, in which at regular distances notches 9 and 10 are applied. The positioning of the notches 5 is thus, that both parts 1 and 2 can co-operate with their sides 4, so that by their conjuction, the formation of enclosed channels is provided for.

The aforesaid parallel grooves 5 are carried out at equal distances from each other. The notches 9 and 10 in the raised rims 7 and 8 extend preferably to the full height of those rims and may show e.g. a trapezoidal shape.

In order to obtain the suitable co-operation of parts 1 and 2, these are provided at their sides 4 with guiding means such as e.g. a groove 11 and a raised guide or rim 12. Through the cooperation of the respective guiding means 11 and 12 of both parts 1 and 2 is obtained that the latter can be positively slid along one another in the direction of the semi-cylindrical grooves 5.

Furthermore for the apparatus according to the invention will be used preferably an adapted spatula 13, as represented in figure 1, that will show a width allowing it to co-operate with the two opposite notches 9 and 10.

The operation of the apparatus is now described hereafter, following figures 3 to 11 inclusive.

In the first step as per figures 3 and 4, the pasty- or doughy product 14 is being applied to side 6 of either parts 1 or 2. In most cases the product 14 will consist of forcemeat or similar. The product 14 is being relatively well pressed in such a way that a homogeneous mass is obtained.

Then, as represented in figures 5 and 6, the product is being smoothed out by means of the spatula 13, at which the spatula 10 is moved in a slantwise position, over the raised rims 7 and 8, scraping away the superfluous paste.

After that, according to figures 7 and 8, the smoothed out product 14 is being devided in strips 15 by pressing down the spatula 13 respectively in the opposite notches 9 and 10. The obtained strips 15 have essentially a rectangular section.

In a next step, as per figure 9, the strips 15 of pasty-or doughy product 14, are applied, either with the spatula 13 or by hand and squarely on the lengthwise grooves 5 at side 4 of the other part, in this case part 2. In doing so the strips 15 are placed on the lower part 2 with a relatively wide spacing, as represented more specifically in figure 10.

In a last step the first part 1 is being pressed on part 2, as represented in figure 2, at which by compression of both parts 1 and 2 the aforementioned product 14 ends up wadded in the channels formed. Through sliding along one another of both parts 1 and 2 as represented in figure 11, every wadd is being rolled into a ball 16.

The present invention is by no means limited to the form of design described as an example and represented in the figures, but such apparatus for the manufacture of pasty- or doughy product balls can be realized in all sorts of forms and measurements.

## Claims

1.- Apparatus for the manufacture of balls from pasty- or doughy products, characterized thereby that it consists of two essentially identical parts (1 - 2) formed both by a plane element (3) that at one side (4) is provided with parallel semi-cylindrical grooves (5), having at the other side (6) means of dosage, the aforesaid grooves (5) being positioned in such a way that when both parts (1 - 2) are inversily placed on one another, they can both co-operate together and provide for the formation of channels.

2.- Apparatus as per conclusion 1, characterized thereby that the means of dosage consist of two opposite raised rims (7 -8), provided with notches (9 - 10) at regular distances.

3.- Apparatus as per one of the preceding conclusions, characterized thereby that the sides (4) through which both parts (1 - 2) can co-operate with one another, also have guiding means, allowing the mutual sliding of both parts (1 - 2) in the direction of the parallel grooves (5).

4.- Apparatus as per conclusion 3, characterized thereby that the guide means essentially consist of, on one hand, a groove (11) and on the other hand, a raised guide or rim, similarly shaped (12).

5.- Apparatus as per one of the foregoing conclusions, characterized thereby that it contains also a spatula (13) that can co-operate with the opposite notches (9 - 10) in the raised rims (7 - 8).

6.- Apparatus for the manufacture of balls from pasty- or doughy products, essentially as described hereabove and represented in the annexed figures.

**Fig.1**

**Fig.2**

Fig.3

Fig.4

Fig.5

Fig.6

Fig.7

Fig.8

Fig.9

Fig.10

Fig.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 541 188 (UNILEVER)<br>* The whole document *<br>--- | 1 | A 22 C 7/00<br>A 47 J 43/20 |
| A | BE-A- 656 831 (DE BRUYCKER)<br>--- | | |
| A | BE-A- 531 136 (MARTIN)<br>--- | | |
| A | GB-A- 924 212 (SCHMIDT)<br>--- | | |
| A | US-A-4 437 826 (TEZUKA)<br>--- | | |
| A | DE-U-8 513 973 (SONNTAG)<br>--- | | |
| A | US-A-3 002 220 (RIKHOFF)<br>--- | | |
| A | US-A-3 713 187 (QUARTARONE)<br>--- | | |
| A | US-A-4 187 582 (DILORETO)<br>--- | | |
| A | US-A-4 025 273 (MAUER)<br>----- | | |

TECHNICAL FIELDS SEARCHED (Int. Cl.4)

A 22 C
A 21 C
A 47 J

The present search report has been drawn up for all claims

| Place of search | Date of completion of the search | Examiner |
|---|---|---|
| THE HAGUE | 02-05-1988 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)